# EUROPÄISCHE PATENTSCHRIFT

(11) **EP 2 542 394 B1**
(45) Veröffentlichungstag und Bekanntmachung des Hinweises auf die Patenterteilung: **26.11.2014**
(21) Anmeldenummer: 11709665.1
(22) Anmeldetag: 07.03.2011
(51) Int. Cl.: B29B 9/06, F16D 3/40

(54) **SCHNEIDVORRICHTUNG FÜR EINEN GRANULATOR ZUM SCHNEIDEN VON GRANULAT**
CUTTING DEVICE FOR A GRANULATOR FOR OBTAINING GRANULES BY CUTTING
DISPOSITIF DE DÉCOUPE POUR GRANULATEUR PERMETTANT D'OBTENIR DES GRANULÉS PAR DÉCOUPE

(30) Priorität: 05.03.2010 DE 102010010368
(43) Veröffentlichungstag der Anmeldung: 09.01.2013
(73) Patentinhaber: Automatik Plastics Machinery GmbH, 63762 Grossostheim (DE)
(72) Erfinder: DAHLHEIMER, Stefan, 63801 Kleinostheim (DE)
(74) Vertreter: Puschmann Borchert Bardehle Patentanwälte Partnerschaft mbB
(86) Internationale Anmeldenummer: PCT/EP2011/053369
(87) Internationale Veröffentlichungsnummer: WO 2011/107609

(56) Entgegenhaltungen:
- EP-A2- 0 160 319
- DE-A1- 10 321 723
- US-A- 4 260 356

## Beschreibung

Die Erfindung bezieht sich auf eine Schneidvorrichtung für einen Granulator zum Schneiden von Granulat von aus Düsen austretenden Kunststoffsträngen mit einem Messerrotor, der über ein kardanisch wirkendes Gelenkstück mit Antriebsteil und Abtriebsteil mit einer Antriebswelle verbunden ist, bei der sowohl das Antriebsteil als auch das Abtriebsteil ein Kraftübertragungsstück jeweils mit einer Art Gabel derart umfassen, dass die Gabeln gegeneinander um 90 Grad verdreht das Kraftübertragungsstück einfassen, wobei jede Gabel eine das Kraftübertragungsstück durchsetzende Achse trägt und beide Achsen gegeneinander im wesentlichen um 90 Grad versetzt sind.

Eine derartige Schneidvorrichtung ist aus der DE 103 21 723 bekannt. Gemäß der in Figur 5 dieser Druckschrift dargestellten Schneidvorrichtung sind drei einzelne zusammengesetzte Teile erforderlich, um ausgehend von einem Antriebsteil über ein kardanisch wirkendes Gelenkstück einen Messerrotor anzutreiben, wobei die Kraftübertragung über das Gelenkstück erfolgt, bei dem ein Antriebsteil über eine senkrecht zur Antriebsrichtung verlaufende Achse einen mit zwei Achsen ausgestatteten Rahmen betätigt, der die Antriebskraft über eine Achse aufnimmt und über eine senkrecht dazu verlaufende zweite Achse an ein Abtriebsteil abgibt, welch letzteres den Messerträger für eine Schneidvorrichtung bildet. Es liegt daher eine relativ kompliziert aufgebaute Einrichtung vor, durch die beim Betrieb der Schneidvorrichtung auftretende Achsrichtungsänderungen von einer Antriebswelle auf den Messerrotor durch das Gelenkstück ausgeglichen werden. Es ergibt sich damit eine relativ aufwendige Konstruktion, deren Zusammenbau durch das Einschachteln der einzelnen Teile ineinander erheblich erschwert ist.

Eine kardanisch wirkende Gelenkvorrichtung, die Gelenkrichtungen ermöglicht, wie sie auch bei der Erfindung Verwendung finden, ist aus der europäischen Patentanmeldung 0 160 319 bekannt. Die Gelenkvorrichtung enthält in ihrem Zentrum ein würfelförmiges Kraftübertragungsstück, das von zwei sich im Winkel von 90 Grad kreuzenden Achsen durchsetzt ist. Diese Achsen werden von je einem Gabelstück aufgenommen, das jeweils mit zwei Armen das Kraftübertragungsstück aufnimmt, und zwar derart, dass die beiden Gabelstücke mit ihren Achsaufnahmen um 90 Grad gegeneinander verdreht angeordnet sind, so dass von Gabelstück zu Gabelstück ein Antrieb und ein Abtrieb in jedem beliebigen Winkel möglich ist. Die US 4 260 356 A zeigt eine Schneidvorrichtung gemäß dem Oberbegriff des Anspruchs 1.

Der Erfindung liegt die Aufgabe zugrunde, die eingangs erwähnte Schneidvorrichtung in einem Messerrotor so zu gestalten, dass diese in der Richtung der Kraftübertragung besonders eng gestaltet ist, wodurch sie vorteilhaft in Granuliervorrichtungen eingesetzt werden kann, in denen üblicherweise der Raumbedarf besonders begrenzt ist. Erfindungsgemäß geschieht dies dadurch, dass das Kraftübertragungsstück mit seinen beiden Gabeln derart in den Messerrotor eingebaut ist, dass die eine Gabel Bestandteil des Messerrotors ist und die andere Gabel Bestandteil einer Achsaufnahme zur Verbindung mit einer Antriebswelle ist.

Es werden also die beiden Gabeln in die notwendigen Bestandteile des Messerrotors integriert, so dass der Messerrotor selbst in seiner axialen Ausdehnung besonders kurz gestaltet ist, wobei das Grundprinzip vollständig erhalten bleibt, dass der Antrieb und der Abtrieb jeweils in jedem beliebigen Winkel zueinander erfolgen kann. Hierzu werden die beiden Achsen des Kraftübertragungsstücks in eine Ebene gelegt. Vorteilhaft wird dabei die den Düsen zugewandte Seite des Messerrotors geschlossen ausgeführt.

In den Figuren ist ein Ausführungsbeispiel der Erfindung dargestellt.

Es zeigen:
- Figur 1: die Einzelteile der Schneidvorrichtung mit dem Würfel und den zu beiden Seiten dargestellten Gabeln in einer Lage unmittelbar vor dem Zusammenstecken,
- Figur 2: die in Figur 1 dargestellten Einzelteile zusammengesteckt zu einer Baugruppe als Schneidvorrichtung für einen Granulator;
- Figur 3: die Einzelteile einer Schneidvorrichtung mit zwei ineinander gesteckten Gabeln;
- Figur 4: die in Figur 3 dargestellten Einzelteile zu einer Baugruppe zusammen gesteckt.

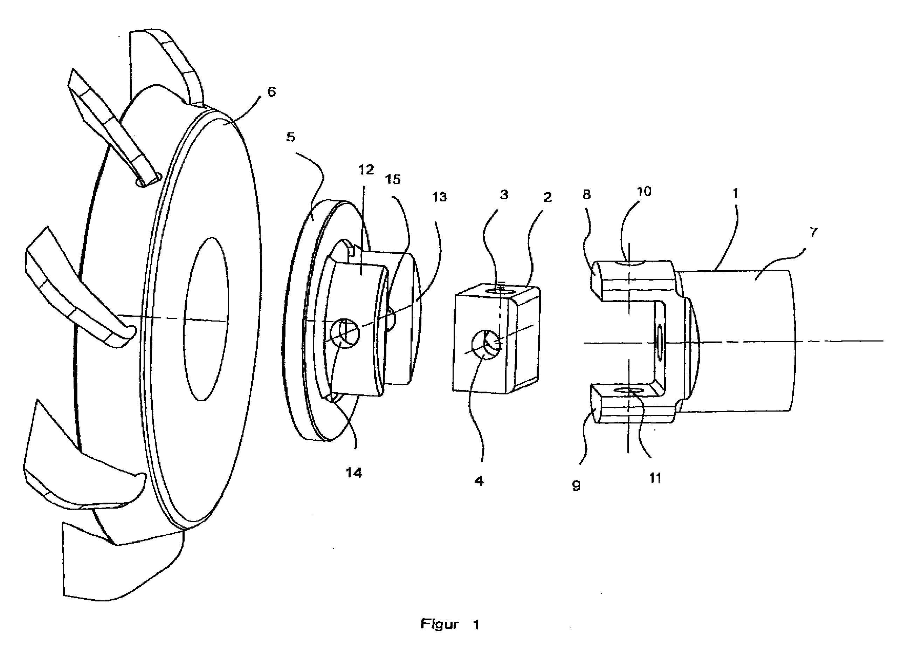

In der Figur 1 sind die Einzelteile der erfindungsgemäßen Schneidvorrichtung eines ersten Ausführungsbeispiels dargestellt. Es handelt sich dabei um die Gabel 1, an die irgend eine Antriebswelle anzuschließen ist, den als Kraftübertragungsstück wirkenden Würfel 2 mit den beiden Achslöchern 3 und 4, der Gabel 5 und dem an der Gabel in irgend einer bekannten Weise befestigten Messerrotor 6 mit den Messern 29.

Die Gabel 1 weist die Achsaufnahme 7 auf, die in irgendeiner bekannten Weise mit einer Antriebswelle zu verbinden ist. Aus der Gabel 1 wachsen die beiden Gabelzinken 8 und 9 heraus, die einen solchen Abstand voneinander einhalten, dass der Würfel 2 passend zwischen die beiden Gabelzinken 8 und 9 eingesetzt werden kann. Bei diesem Zusammenbau wird der Würfel 2 so weit zwischen die Gabelzinken 8 und 9 eingeschoben, dass sein Achsloch 3 mit den Achslöchern 10 und 11 in den Gabelzinken 8 und 9 fluchtet, so dass später nach Zusammensetzung aller Einzelteile in die Bohrungen 3, 10 und 11 passende Achsen eingeschoben werden können.

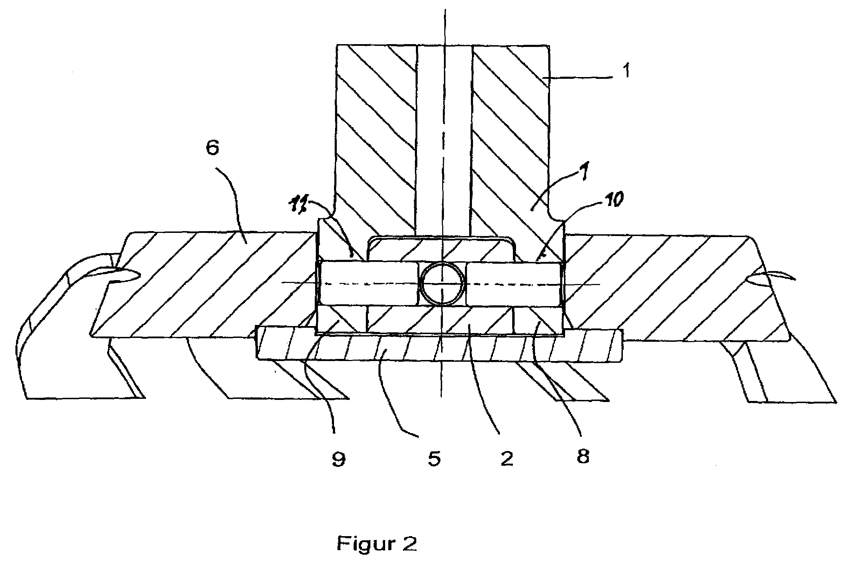

Figur 1 zeigt weiterhin die Gabel 5 mit den beiden Gabelzinken 12 und 13, die ähnlich gestaltet sind wie die Gabelzinken 8 und 9. Die Gabelzinken 12 und 13 weisen einen solchen Abstand voneinander auf, dass der Würfel 2 passend zwischen die beiden Gabelzinken 12 und 13 eingeschoben werden kann, bis die Bohrung 4 im Würfel 2 mit den Achslöchern 14 und 15 in den beiden Gabelzinken 12 und 13 fluchtet, so dass schließlich auch hier eine Achse eingeschoben werden kann. Damit erhält der betreffende Teil einer Schneidvorrichtung seine endgültige Gestalt, wie sie in der Figur 2 dargestellt ist.

Figur 2 zeigt die Zusammenstellung der in der Figur 1 dargestellten Einzelteile. Dargestellt ist die Gabel 1, die mit ihren beiden Zinken 8 und 9 den Würfel 2 erfasst. Dabei ist die Gabel 1 um eine gestrichelt gezeichnete Achse schwenkbar, die in die Achslöcher 10 und 11 eingeschoben ist.

Figur 2 zeigt weiterhin den Messerrotor 6, der mit der Gabel 5 fest verbunden ist. Bei Antrieb über die Gabel 1 ergibt sich somit unter Einbeziehung des Würfels 2 und der Gabel 5 ein Antrieb des Messerrotors 6, der dabei im Rahmen der kardanisch gelenkigen Verbindung gegebenenfalls winkelmäßig etwas gegenüber der Gabel 1 versetzt sein kann.

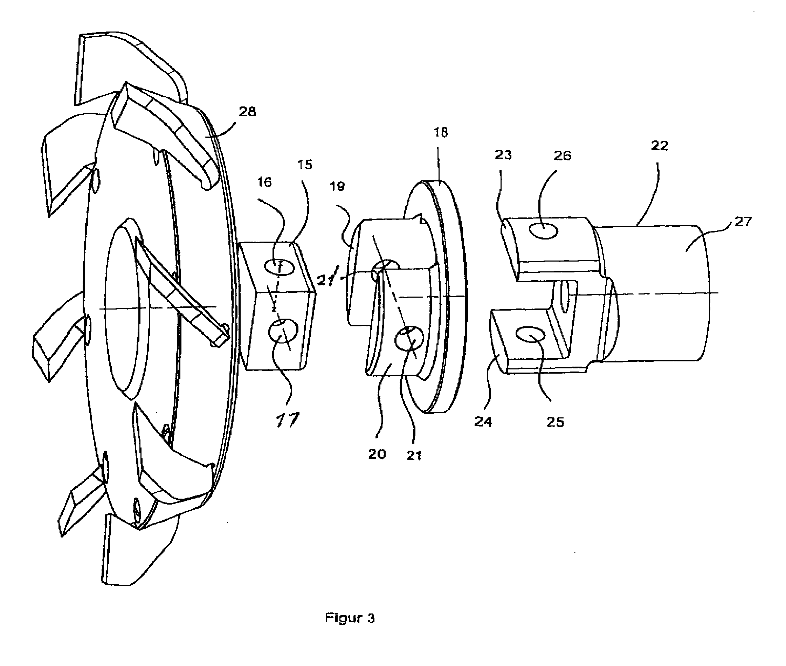

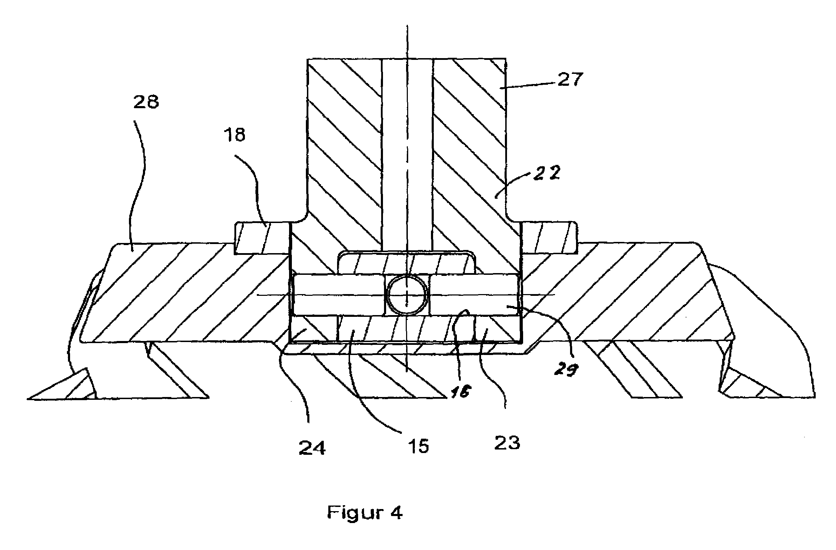

In den Figuren 3 und 4 ist eine gegenüber dem Ausführungsbeispiel nach den Figuren 1 und 2 abgewandelte Gestaltung dargestellt, bei der die das Kraftübertragungsstück 15 erfassenden Gabelzinken 19 und 20 von der gleichen Seite her über das Kraftübertragungsstück 15 geschoben sind wie die Gabelzinken 23 und 24. Das Kraftübertragungsstück 15 ist prinzipiell in gleicher Weise gestaltet wie das Kraftübertragungsstück 2 gemäß Figur 1. Es ist mit den beiden sich kreuzenden Bohrungen 16 und 17 versehen, die der Aufnahme von Achsen für die Verdrehung einerseits der einen Gabel 18 und andererseits der anderen Gabel 22 dienen. Die Gabel 18 wird mit ihren beiden Gabelzinken 19 und 20 über das Kraftübertragungsstück 15 geschoben, wobei die Achslöcher 21 und 21' miteinander fluchten. In die Gabel 18 ist, wie die Figur 4 zeigt, die Gabel 22 mit den Gabelzinken 23 und 24 eingeschoben, die dabei das Kraftübertragungsstück 15 entsprechend umfassen, wobei die Bohrung 16 und die Bohrungen 25, 26 miteinander fluchten. Die Gabel 18 besitzt in ihrem Raum zwischen den Gabelzinken 19, 20 einen genügend großen Freiraum, der eine entsprechende Schwenkbewegung der Gabelzinken 23 und 24 der anderen Gabel 22 erlaubt. Demgemäß können also die Gabeln 18 und 22 jeweils gegenüber dem Kraftübertragungsstück 15 schwenken, womit die kardanische Beweglichkeit dieser Teile zueinander gewährleistet ist. Die Gabel 22 geht in das Antriebsteil 27 über, das dann an irgendeinen Antrieb angeschlossen werden kann. Die Gabel 18 ist in eine entsprechend gestaltete Aufnahme an dem Messerrotor 28 eingesetzt, so dass also mit der entsprechenden Beweglichkeit der Gabel 18 deren Drehung auf den Messerrotor 28 übertragen wird.

In der Figur 4 ist die Zusammenstellung der in Figur 3 auseinandergezogen dargestellten Teile widergegeben. Hieraus ist ersichtlich, dass durch die in der Figur 4 wiedergegebene Zusammenstellung eine kardangelenkmäßige Verbindung zwischen dem Antriebsteil 27 und dem Messerrotor 28 geschaffen ist. Innerhalb des Messerrotors 28 ist das Kraftübertragungsstück 15 untergebracht, von dem die Bohrung 16 dargestellt ist, die von einer in den Gabelzinken 23, 24 verankerten Achse 29 durchsetzt ist.

Es wird darauf hingewiesen, dass wegen der Kreuzung der Bohrungen 3/4 bzw. 16/17 diese Bohrungen von nur einer durchgehenden Achse durchsetzt sind, die dann entweder im Messerrotor oder im Antriebsteil gelagert ist, während die kreuzende andere Achse durch die betreffenden rechtwinklig dazu gelegte Bohrungen aus jeweils zwei Achsstummeln besteht, die in dem betreffenden äußeren Teil, also entweder Antriebsteil oder Messerrotor, eingesetzt sind, und von dort aus den betreffenden Gabelzinken in das betreffende Antriebsteil hineinragen.

## Patentansprüche

1. Schneidvorrichtung für einen Granulator zum Schneiden von Granulat von aus Düsen austretenden Kunststoffsträngen mit einem Messerrotor (6, 28), der über ein kardanisch wirkendes Gelenkstück mit Antriebsteil und Abtriebsteil mit einer Antriebswelle verbunden ist, bei der sowohl das Antriebsteil als auch das Abtriebsteil ein Kraftübertragungsstück (2, 15) jeweils mit einer Art Gabel (1, 5; 18, 22) derart umfassen, dass die Gabeln (1, 5; 18, 22) gegeneinander um 90 Grad verdreht das Kraftübertragungsstück (2, 15) einfassen, wobei jede Gabel (1, 5; 18, 22) eine das Kraftübertragungsstück (2, 15) durchsetzende Achse trägt und beide Achsen gegeneinander im wesentlichen um 90 Grad versetzt sind, **dadurch gekennzeichnet, dass** das Kraftübertragungsstück (2, 15) mit seinen beiden Gabeln (1,5; 18 22) derart in den Messerrotor (6, 28) eingebaut ist, dass die eine Gabel (5, 18) Bestandteil des Messerrotors (6, 28) ist und die andere Gabel (1, 22) Bestandteil einer Achsaufnahme (7) zur Verbindung mit einer Antriebswelle ist

2. Schneidvorrichtung nach Anspruch 1, **dadurch gekennzeichnet, dass** das Kraftübertragungsstück (2, 15) die Form eines Würfels aufweist.

3. Schneidvorrichtung nach Anspruch 2, **dadurch gekennzeichnet, dass** jeweils zwei gegenüberliegende Seiten des Würfels von den beiden Gabelzinken (8, 9; 12, 13; 23, 24; 19, 20) einer Gabel (1, 5; 18, 22) eingefasst sind.

4. Schneidvorrichtung nach einem der Ansprüche 1 bis 3, **dadurch gekennzeichnet, dass** die beiden Achsen (3, 4; 16, 17) in einer Ebene liegen.

5. Schneidvorrichtung nach einem der Ansprüche 1 bis 4, **dadurch gekennzeichnet, dass** die den Düsen zugewandte Seite des Messerrotors (6) geschlossen ausgeführt ist.

## Claims

1. A cutting device for a granulator for obtaining granules from cutting plastic strands which are discharged from nozzles, said cutting device comprising a cutting rotor (6, 28) which is connected to a drive shaft by means of a cardanic joint piece comprising a driven part and a drive part in which both said drive part and said driven part comprise a force-transmitting part (2, 15) each having a prong-like element (1, 5; 18, 22) such that said prong-like elements (1, 5; 18, 22), twisted by 90° relative to each other, will enclose said force-transmitting part (2, 15), with each prong-like element (1, 5; 18, 22) supporting an axle that extends through said force-transmitting part (2, 15) and both axles being essentially twisted by 90° relative to each other **characterized in that** said force-transmitting part (2, 15) and its two prong-like elements (1, 5; 18, 22) are mounted within said cutting rotor (6, 28) in such a manner that the one prong-like element (5, 18) is an integral part of said cutting rotor (6, 28) and the other prong-like element (1, 22) is an integral part of an axle mount (7) for connection to a drive shaft.

2. The cutting device of claim 1 **characterized in that** said force-transmitting part (2, 15) is provided in the form of a cube.

3. The cutting device of claim 2 **characterized in that** two opposite sides each of said cube are enclosed by the two prong extensions (8, 9; 12, 13; 23, 24; 19,20) of a prong-like element (1, 5; 18, 22).

4. The cutting device of one of claims 1 to 3 **characterized in that** the two axles (3, 4; 16, 17) extend in the same plane.

5. The cutting device of one of claims 1 to 4 **characterized in that** the side of said cutting rotor (6, 28) which faces the nozzles is of a closed design.

## Revendications

1. Dispositif de découpe pour un granulateur pour la découpe de granulés à partir de filaments de plastique sortant de buses avec un rotor à lame (6, 28) relié par le biais d'une charnière à articulation cardanique avec une pièce motrice et une pièce de sortie à un arbre d'entraînement, dont la pièce motrice et la pièce de sortie comportent chacune un élément de transmission de force (2,15) avec un type de fourche (1, 5 ; 18, 22) de façon à ce que les fourches (1, 5 ; 18,22), pivotées l'une contre l'autre à 90 °, bordent l'élément de transmission de force (2, 15), chaque fourche (1, 5 ; 18, 22) portant un axe traversant l'élément de transmission de force (2, 15) et chaque axe étant essentiellement décalé l'un vers l'autre de 90 °, **caractérisé en ce que** l'élément de transmission de force (2, 15) avec ses deux fourches (1, 5 ; 18, 22) est intégré au rotor à lame (6, 28) de telle façon que ladite fourche (5,18) fait partie intégrante du rotor à lame (6, 28) et que l'autre fourche (1, 22) fait partie intégrante d'un logement d'axe (7) afin d'établir la liaison avec un arbre d'entraînement.

2. Dispositif de découpe selon la revendication 1, **caractérisé en ce que** l'élément de transmission de force (2, 15) a la forme d'un dé.

3. Dispositif de découpe selon la revendication 2, **caractérisé en ce que** deux côtés opposés l'un à l'autre du dé sont bordés par les deux dents (8, 9 ; 12, 13 ; 23, 24 ; 19, 20) d'une fourche (1, 5 ; 18, 22).

4. Dispositif de découpe selon l'une des revendications 1 à 3, **caractérisé en ce que** les deux axes (3, 4 ; 16, 18) sont disposés sur un même plan.

5. Dispositif de découpe selon l'une des revendications 1 à 4, **caractérisé en ce que** le côté du rotor à lame (6) orienté vers les buses est conçu fermé.
